# EUROPEAN PATENT APPLICATION

(11) **EP 3 944 173 A1**
(43) Date of publication of application: **26.01.2022**
(21) Application number: 21179986.1
(22) Date of filing: 17.06.2021
(51) Int. Cl.: G06Q 20/20, G06Q 20/38, G07G 1/00, G07G 1/14

(54) **SALES DATA PROCESSING APPARATUS, SALES DATA PROCESSING SYSTEM, AND PROGRAM**

(30) Priority: 22.07.2020 JP 2020125747
(71) Applicant: Toshiba TEC Kabushiki Kaisha, Tokyo 141-8562 (JP)
(72) Inventor: Yamamoto, Ryuzo, Shinagawa-ku, Tokyo 141-8562 (JP)
(74) Representative: Bandpay & Greuter

(57) **Abstract**

According to one or more embodiments, a sales data processing apparatus includes a display device, a generating unit, an output unit, and a settlement processing unit. The generating unit generates display data for displaying information on the display device and an information terminal. The output unit outputs the display data to the information terminal. The settlement processing unit executes accounting processing for a transaction based on operation information received from the information terminal in response to displayed information displayed according to the display data from the output unit.

## Description

### FIELD

Embodiments described herein relate generally to a sales data processing apparatus, a sales data processing system, and a sales data processing program.

### BACKGROUND

In recent years, a Point of Sales (POS) terminal (hereinafter referred to as tablet POS (Point Of Sales) as well) that can perform transaction processing in conjunction with or on a portable information terminal has been developed. For example, a tablet-type terminal can be provided in a retail store as a tablet-type POS ("tablet POS") placed on a checkout counter at which a cash drawer for storing money and a printer for dispensing receipts are located or as a portable POS terminal carried by a store clerk attending customers.

With a tablet POS, a store clerk can perform commodity registration and settlement processing while explaining a commodity to the customer by using commodity information displayed on a display screen of the tablet POS. Such a tablet POS is often used at various stores, such as a clothing store where personalized customer service might be preferred, and is considered to permit more efficient customer assistance by a store clerk in such situations.

However, since the tablet POS is portable and battery-driven, battery exhaustion might occur while the store clerk is providing assistance. It is also likely that a store clerk might misplace a tablet POS at some point during the job and/or lose the tablet POS by a theft or the like. With a tablet POS, if battery exhaustion, misplacement, or the loss occurs during performance of a task, the processing state of the task being performed might be lost and the task cannot be appropriately completed.

For example, if a customer is in the process of purchasing several different commodities when battery exhaustion occurs, the previous registration of the commodities might be lost, but in any event the store clerk can no longer see the display screen on which the already registered commodities would be displayed. Accordingly, unless the battery of the tablet POS is charged, the store clerk cannot confirm which commodities have been registered.

Hence, there is a need for a sales data processing apparatus, a sales data processing system, and a sales data processing program capable of confirming a status of an outstanding processing task in the event of an accident that makes the tablet POS unavailable or dysfunctional.

### BRIEF DESCRIPTION OF THE DRAWINGS

FIG. 1 depicts a sales data processing system according to an embodiment.
FIG. 2 depicts screens of a display device of a sales data processing apparatus and a terminal display device of an information terminal according to an embodiment.
FIG. 3 depicts aspects of a sales data processing apparatus according to an embodiment.
FIG. 4 depicts a data configuration of a display data unit according to an embodiment.
FIG. 5 depicts a data configuration of a commodity master unit according to an embodiment.
FIG. 6 depicts a data configuration of a frame master unit according to an embodiment.
FIG. 7 depicts a sales data processing apparatus according to an embodiment.
FIG. 8 depicts a configuration of an information terminal according to an embodiment.
FIG. 9 depicts aspects related to functions of an information terminal according to an embodiment.
FIG. 10 is a sequence chart of payment processing by a sales data processing system according to an embodiment.
FIG. 11 is a flowchart of payment processing by a sales data processing apparatus according to an embodiment.
FIG. 12 is a flowchart of commodity registration processing by a sales data processing apparatus according to an embodiment.
FIG. 13 is a flowchart of closing processing by a sales data processing apparatus according to an embodiment.
FIG. 14 is a flowchart of accounting processing by a sales data processing apparatus according to an embodiment.

### DETAILED DESCRIPTION

The present invention is defined by independent claims, and advantageous embodiments are described in dependent claims.

According to an embodiment, a sales data processing apparatus includes a display device, a generating unit, an output unit, and a settlement processing unit. The generating unit is configured to generate display data for displaying information on both the display device and an information terminal. The output unit is configured to output the display data to the information terminal. The settlement processing unit is configured to execute accounting processing for a transaction based on operation information received from the information terminal in response to displayed information displayed according to the display data output from the output unit.

Certain example embodiments will be described with reference to the accompanying drawings. These example embodiments are directed to a case in which a sales data processing system including a sales data processing apparatus and an information terminal is installed and used at a clothing store. However, embodiments of the disclosure are not limited to such a case. The sales data processing system can be used at any applicable stores or places that perform various businesses and accounting processing related to each business.

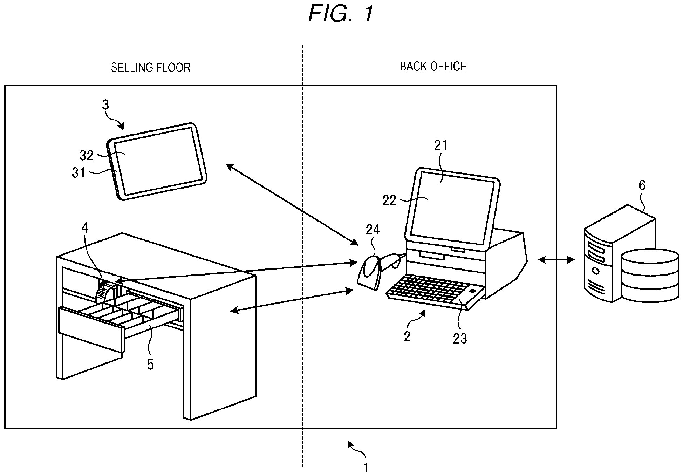

FIG. 1 depicts an overview of the sales data processing system 1 according to one embodiment. The sales data processing system 1 includes a POS main body 2, a tablet Personal Computer (PC) 3, a receipt printer 4, and a drawer 5. The POS main body 2 is connected to the tablet PC 3, the receipt printer 4, and the drawer 5 via a network such as a Local Area Network (LAN).

The POS main body 2 is an example of a sales data processing apparatus in the present embodiment. The POS main body 2 is installed, for example, in a back office of a store and connected to a store server 6 via a network such as a LAN. The store server 6 may be installed in the back office or may be located in other places. The POS main body 2 includers a display 21, a touch panel 22, a keyboard 23, and a scanner 24.

The display 21 is an example of a display device that displays transaction information or information relating to a transaction. The transaction information includes, for example, a name and a price of a commodity, such as a clothes, to be purchased by a customer, a total amount of a transaction, a change amount to be paid to a customer during accounting processing, and a selection button for a settlement method such as cash settlement or various kinds of cashless settlement. The display 21 also displays commodity information or information specific to a commodity. The commodity information includes, for example, images, prices, sizes, colors, and the like of commodities being sold at a store such as a clothing store.

The touch panel 22 is provided on a surface of the display 21 and sends information corresponding to a touched position to a control unit of the POS main body 2. Operation by a store clerk or the like is input to the touch panel 22. The touch panel 22 is an example of an input operation unit or an input device.

The keyboard 23 includes, for example, numeric keys for inputting a commodity code, an amount, and the like, a subtotal key for requesting calculation of a sales total amount, a closing key for closing processing of a transaction being performed to determine a settlement price, a confirmation key for confirming a number input by the numeric keys, and a clear key for clearing an input. Various other operations by a store clerk or the like can be input via the keyboard 23 as well. The keyboard 23 is also an example of an input operation unit or an input device.

The scanner 24 may be a hand-held ("handy") scanner. The scanner 24 emits laser light and receives reflected light from a code symbol such as a barcode attached to a commodity to recognize the code symbol. The scanner 24 decodes the code symbol, reads a commodity code indicated by the code symbol, and transmits the commodity code to the POS main body 2.

In some examples, the touch panel 22, the keyboard 23, and the scanner 24 of the POS main body 2 are primarily operated when the tablet PC 3 cannot be used due to an unexpected error, malfunction, accident, or the like.

The tablet PC 3 is an example of an information terminal or a portable information terminal. The tablet PC 3 may be located in one of the various departments, sections, areas, of the store or may be carried by a store clerk or the like. The tablet PC 3 includes a display 31 and a touch panel 32.

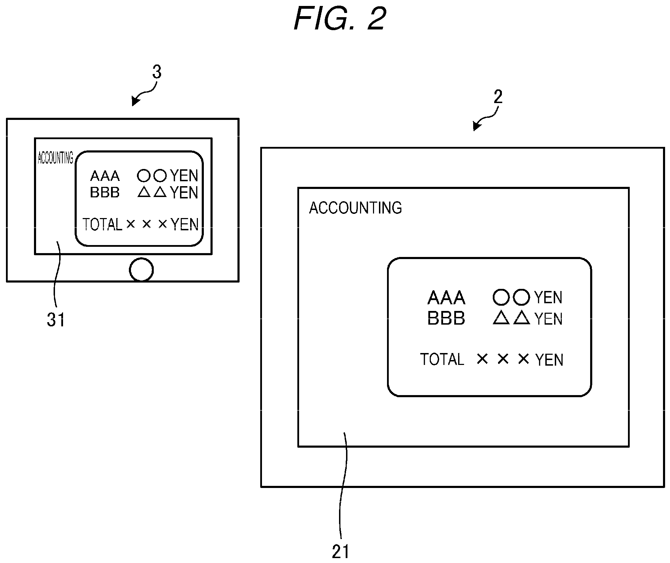

The display 31 is an example of a terminal display device that performs information display based on display data received from the POS main body 2. The display 31 displays, substantially in real time, the same information as those displayed on the display 21 of the POS main body 2. As shown in FIG. 2, the display 21 of the POS main body 2 and the display 31 are configured to display information in the same or substantially the same manner as each other. In other embodiments, the display 21 and the display 31 may display information in a different manner or format.

Referring back to FIG. 1, the touch panel 32 is provided on a surface of the display 31 and receives information corresponding to a touched position. For example, the touch panel 32 receives input corresponding to information displayed on the display 31 based on the display data acquired from the POS main body 2.

The receipt printer 4 is provided at a register counter, a check-out counter, or the like on the selling floor of the clothing store. The receipt printer 4 is, for example, a thermal printer. The receipt printer 4 prints information related to a transaction as received from the POS main body 2 and dispenses a receipt.

Also provided at the register counter or the like is the drawer 5 adjacent to or near the receipt printer 4. The drawer 5 stores money (e.g., bank notes, coins, and the like) of various denominations. The drawer 5 can be opened or locked based on an instruction signal received from the POS main body 2.

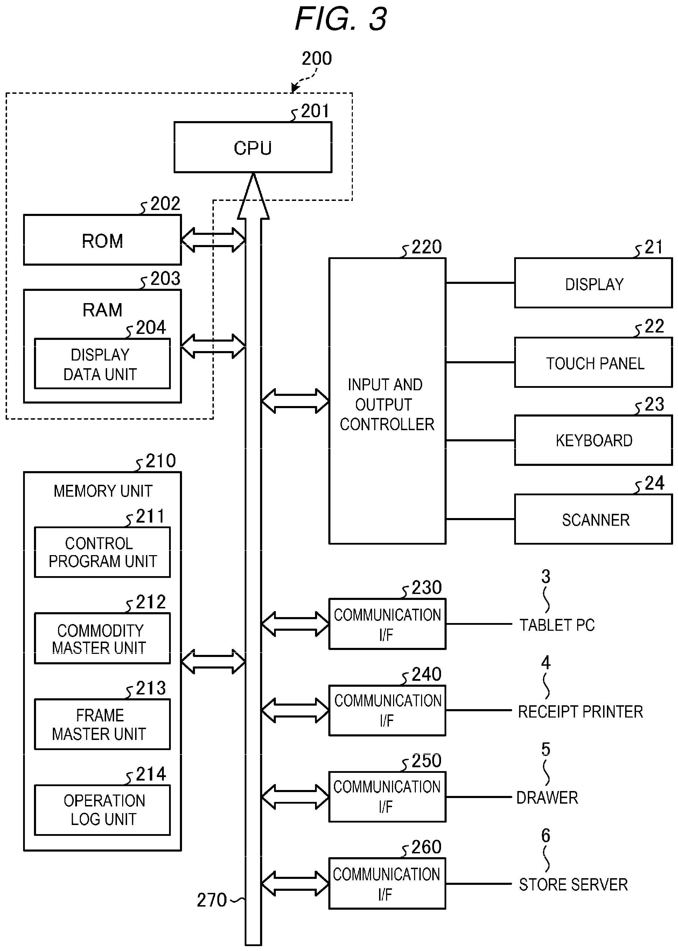

FIG. 3 depicts an example configuration of the POS main body 2. The POS main body 2 includes a control unit 200, a memory unit 210, an input and output controller 220, and communication interfaces (I/Fs) 230, 240, 250 and 260. The control unit 200, the memory unit 210, the input and output controller 220, and the communication I/Fs 230, 240, 250 and 260 are connected to one another via a bus 270.

The control unit 200 is, for example, a computer including a Central Processing Unit (CPU) 201, a Read-Only Memory (ROM) 202, and a Random-Access Memory (RAM) 203. The CPU 201, the ROM 202, and the RAM 203 are connected to one another via the bus 270.

The CPU 201 controls operation of the POS main body 2. The ROM 202 stores various programs, such as a program used for driving the CPU 201, and various data.

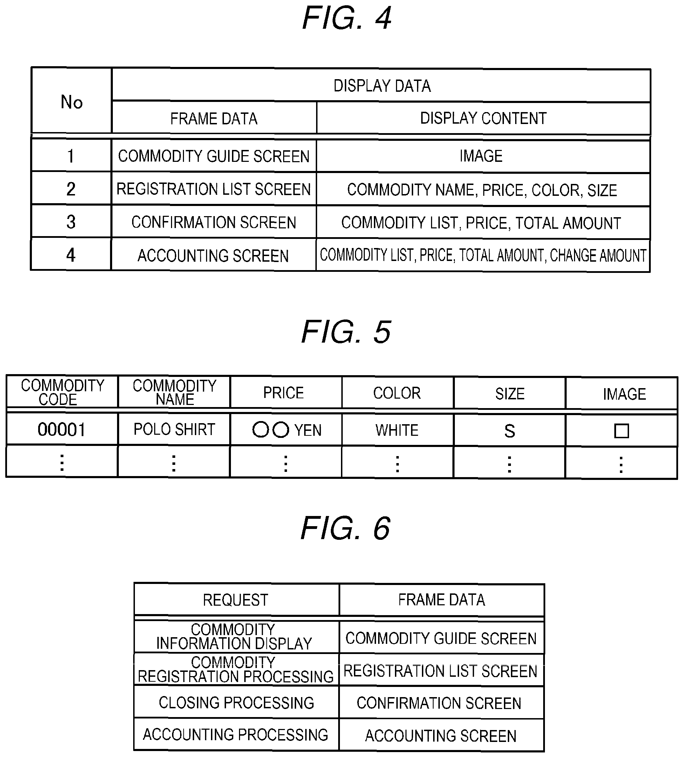

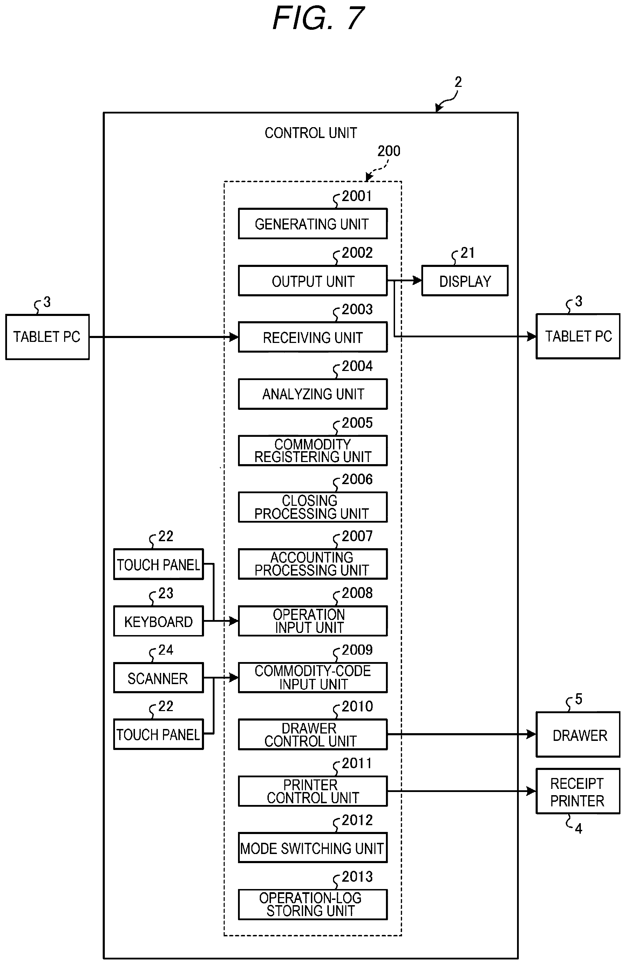

The RAM 203 includes a display data unit 204. The display data unit 204 stores, based on operation information received from the tablet PC 3, display data generated by a generating unit 2001 (see FIG. 7). For example, based on a request from the tablet PC 3, the generating unit 2001 refers to a commodity master and a frame master and generates display data. FIG. 4 depicts an example data structure of the display data unit 204. The display data stored in the display data unit 204 includes frame data that defines a frame design of a screen and data that indicates display content.

In the example data structure, display data for row No. 1 is generated by the generating unit 2001 in a case where operation information indicating a request for a commodity image is received from the tablet PC 3. The display data for row No. 1 indicates data for displaying an image of a designated commodity in a commodity guide screen frame.

Display data for row No. 2 is data generated by the generating unit 2001 in a case where operation information indicating a request for commodity registration processing is received from the tablet PC 3. The row No. 2 display data is data for displaying a commodity name, a price, a color, and a size of a designated commodity in a registration list screen frame.

Display data of row No. 3 is display data generated by the generating unit 2001 in a case where operation information indicating a request for closing processing is received from the tablet PC 3. The display data of row No. 3 is data for displaying a list of transaction commodities (commodities to be purchased) to be subjected to the closing processing, prices of the commodities being purchased, and a total amount due for the commodities being purchased in a confirmation screen frame.

Display data of row No. 4 is display data generated by the generating unit 2001 in a case where operation information indicating a request for settlement processing ("accounting") is received from the tablet PC 3. The display data of row No. 4 is data for displaying a list of traded commodities, prices, a total amount, and a change amount of the commodities in an accounting screen frame. The display data of rows No. 1 to No. 4 are examples. In general, the some or all of the display data can be generated by the generating unit 2001 according to necessity and stored in the display data unit 204. The data structure of the display data unit 204 can be arranged or modified as appropriate.

The RAM 203 is used as a work area of the CPU 201. Various programs and various data stored in the ROM 202 and the memory unit 210 are loaded in the RAM 203. The CPU 201 operates according to a control program stored in the ROM 202 or the memory unit 210 and loaded in the RAM 203, and the control unit 200 executes various kinds of control processing of the POS main body 2.

The memory unit 210 is a storge device including a rewritable nonvolatile storage medium such as a Hard Disk Drive (HDD), a Solid-State Drive (SDD), or a flash memory. The memory unit 210 includes a control program unit 211, a commodity master unit 212, a frame master unit 213, and an operation log unit 214.

The control program unit 211 stores various programs such as a control program for functioning as a sales data processing apparatus and a control program for outputting the display data to the tablet PC 3.

The commodity master unit 212 stores a commodity master. FIG. 5 depicts an example data structure of the commodity master unit 212. The commodity master is a master file correlating and storing, about commodities sold in the store, commodity codes for specifying the commodities and commodity information. The commodity information includes commodity names, prices, colors, sizes, images of the commodities, and the like. Since the commodities sold in the store change every day, the commodity master is updated as appropriate by the store server 6 connected via the communication I/F 260.

The frame master unit 213 stores a frame master. FIG. 6 depicts an example data structure of the frame master unit 213. The frame master is a master file correlating and storing a request indicated by the operation information received from the tablet PC 3 and frame data, which is image data of a background of information displayed on the displays 21 and 31. If the display screens of the display 21 and the display 31 are to be differentiated, the frame master correlates and stores, for each request, frame data for the display 21 and frame data for the display 31.

The operation log unit 214 stores an operation log of operation performed in the tablet PC 3. For example, the operation log unit 214 stores the operation log by analyzing the operation information received from the tablet PC 3.

The input and output controller 220 is connected to the display 21, the touch panel 22, the keyboard 23, and the scanner 24. The input and output controller 220 includes a function of an input and output interface for hardware to be connected and a function of controlling the hardware. The control unit 200 is capable of transmitting and receiving information or data to and from the display 21, the touch panel 22, the keyboard 23, and the scanner 24 via the input and output controller 220 and is capable of controlling the hardware based on an instruction of the control unit 200.

The communication I/Fs 230, 240, 250 and 260 are interfaces for communicating with the tablet PC 3, the receipt printer 4, the drawer 5, and the store server 6, respectively. The control unit 200 is capable of transmitting and receiving information or data to and from the tablet PC 3, the receipt printer 4, the drawer 5, and the store server 6 via the communication I/Fs 230, 240, 250 and 260.

FIG. 7 is a block diagram illustrating certain functional aspects of the POS main body 2. The CPU 201 operates according to a control program stored in the ROM 202 or the control program unit 211 of the memory unit 210, and the control unit 200 functions as the generating unit 2001, an output unit 2002, a receiving unit 2003, an analyzing unit 2004, a commodity registering unit 2005, a closing processing unit 2006, an accounting processing unit 2007, an operation input unit 2008, a commodity-code input unit 2009, a drawer control unit 2010, a printer control unit 2011, a mode switching unit 2012, and an operation-log storing unit 2013. These units and/or the functions thereof may be provided by software, hardware, or a combination of software and hardware.

The generating unit 2001 generates the display data for causing the display 31 of the tablet PC 3 to display the same information as that to be displayed on the display 21 of the POS main body 2. For example, in response to a request from the tablet PC 3, the generating unit 2001 refers to the commodity master unit 212 and the frame master unit 213, creates the display data to be output to the tablet PC 3 and stores the display data in the display data unit 204. The process of generating the display data may include a process of extracting, from the memory unit 210, the display data responding to a request from the tablet PC 3 in a case where that display data has been stored in the memory unit 210 in advance. In other words, the generating unit 2001 may either create the display data or extract stored display data from the memory 210 in response to a request from the tablet PC 3. The display data has a data structure of a format displayable by both the display 21 and the display 31.

The output unit 2002 outputs the display data that has been generated by the generating unit 2001 to the display 21 and the tablet PC 3. If the generating unit 2001 separately generates the display data for the display 21 and the display data for the display 31, the output unit 2002 then separately outputs display data to the display 21 and to the tablet PC 3.

The receiving unit 2003 receives the input operation information from the tablet PC 3. For example, the receiving unit 2003 receives the input operation information based on an input operation received via the touch panel 32 of the tablet PC 3. The input operation information includes an operation signal corresponding to displayed information for the input operation performed on the display 31 based on display data output by the output unit 2002 along with a signal indicating the particular display screen being displayed on the display 31 at that time of the input operation.

The analyzing unit 2004 analyzes the operation information received by the receiving unit 2003 and recognizes a request from the tablet PC 3. For example, the analyzing unit 2004 recognizes a request by referring to a file in which input operation information and requests are mutually correlated.

The commodity registering unit 2005 executes commodity registration processing (may also be referred to as sales registration processing). For example, the commodity registering unit 2005 executes commodity registration in response to a commodity registration request received from the tablet PC 3 or from the touch panel 22, the keyboard 23 or the scanner 24 of the POS main body 2. The commodity registering unit 2005 temporarily stores, in the RAM 203, the commodity information acquired from the commodity master based on an input commodity code.

The closing processing unit 2006 executes closing processing in response to a closing processing request from the tablet PC 3 or from the touch panel 22 or the keyboard 23 of the POS main body 2. The closing processing unit 2006 executes processing such as calculation of a total amount of one transaction based on registered data and an instruction of display for confirming registered commodities.

The accounting processing unit 2007 executes accounting processing in response to an accounting processing request received from the tablet PC 3 or from the touch panel 22 or the keyboard 23 of the POS main body 2. The accounting processing unit 2007 executes processing such as calculation of a change amount based on a total amount calculated by the closing processing unit 2006 and an input received amount, a display instruction for confirming content of the accounting processing, and a receipt dispensing instruction.

Operation signals from the touch panel 22 and the keyboard 23 are input to the operation input unit 2008. If an accident such as battery exhaustion occurs in the tablet PC 3, operation signals relating to various kinds of operations can be input to the operation input unit 2008. For example, an operation signal relating to operations necessary for performing transmission and reception of information to and from the store server 6 is input to the operation input unit 2008.

Commodity codes are input to the commodity-code input unit 2009 from the touch panel 22, the keyboard 23, or the scanner 24. The input of the commodity codes are executed at the POS main body 2, for example, if an accident such as battery exhaustion occurs in the tablet PC 3.

The drawer control unit 2010 controls opening of the drawer 5. If an accounting (settlement) processing request from the touch panel 22 or the keyboard 23 is received, the drawer control unit 2010 outputs an opening instruction to the drawer 5.

The printer control unit 2011 controls the receipt printer 4. The printer control unit 2011 outputs a receipt dispensing instruction to the receipt printer 4 at the end of the accounting processing.

The mode switching unit 2012 switches an operating mode of the accounting processing unit 2007 between a first mode (referred to as tablet mode) and a second mode (referred to as main body mode). The tablet mode is a mode in which processing of the control unit including the accounting processing unit 2007 is performed based on the operation information received from the tablet PC 3 by the receiving unit 2003. The main body mode is a mode in which processing of the control unit including the accounting processing unit 2007 is performed based on inputs from various operation devices such as the touch panel 22, the keyboard 23, and the scanner 24. Since the mode switching unit 2012 switches an operation mode of the control unit 200 including the accounting processing unit 2007, the mode switching unit 2012 can also be considered a mode switching unit that switches an operation mode of the control unit. In one instance, the operation mode is initially set to the tablet mode and is switched to the main body mode according to, for example, specific operation of the touch panel 22, the keyboard 23, or the scanner 24.

The operation-log storing unit 2013 sequentially stores in the operation log unit 214, an operation log of the tablet PC 3 for each individual transaction analyzed by the analyzing unit 2004. By reading out the operation log stored in the operation log unit 214, the operation that had been previously performed at the tablet PC 3 can be readily determined and confirmed at the POS main body 2.

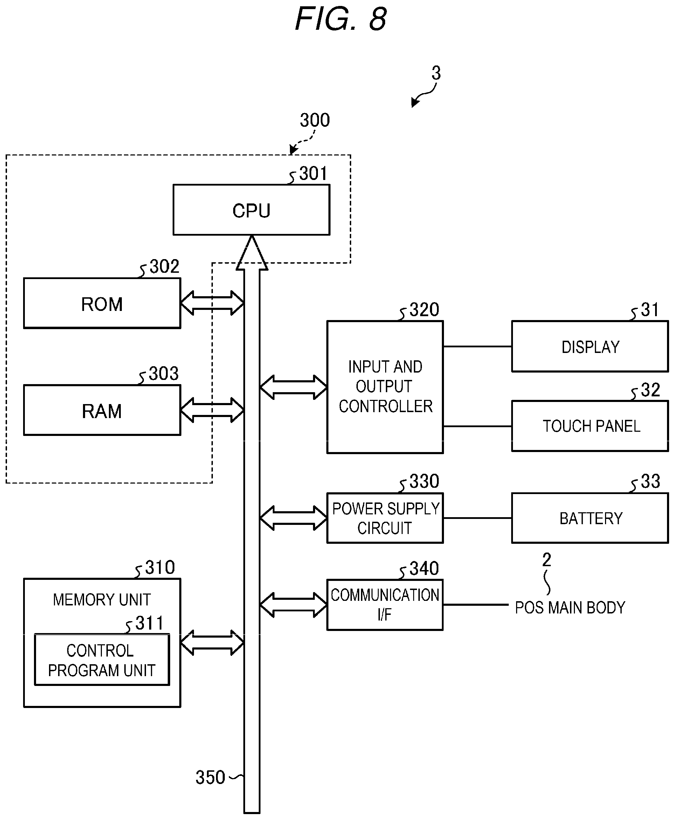

FIG. 8 depicts an example configuration of the tablet PC 3 according to the present embodiment. The tablet PC 3 includes a control unit 300, a memory unit 310, an input and output controller 320, a power supply circuit 330, and a communication I/F 340. The control unit 300, the memory unit 310, the input and output controller 320, the power supply circuit 330, and the communication I/F 340 are connected to one another via a bus 350.

The control unit 300 is configured by a computer including a CPU 301, a ROM 302, and a RAM 303. The CPU 301, the ROM 302, and the RAM 303 are connected to one another via the bus 350.

The CPU 301 controls the operation of the entire tablet PC 3. The ROM 302 stores various programs, such as a program to be used for driving of the CPU 301, and various data.

The RAM 303 is used as a work area of the CPU 301. Various programs and various data stored in the ROM 302 and the memory 310 are loaded in the RAM 303. The CPU 301 operates according to a control program stored in the ROM 302 or the memory unit 310 and loaded in the RAM 303, and the control unit 300 executes various kinds of control processing of the tablet PC 3.

The memory unit 310 is a storage device including, for example, a rewritable nonvolatile storage medium such as an HDD, an SSD, or a flash memory. The memory unit 310 includes a control program unit 311.

The control program unit 311 stores a screen sharing program and the like. The screen sharing program is for displaying the same screen or information as that of the display 21 of the POS main body 2 on the display 31 based on the display data received from the POS main body 2. So long as content of the screen or information displayed on the display 31 is the same as that displayed on the display 21 of the POS main body 2, the screen sharing program may cause the display 21 to display the content of the screen of information in a different form or manner from that of the display 31.

The programs and data stored in the storage devices, such as the ROM 302, the RAM 303 and the memory unit 310, are limited to those for enabling the tablet PC 3 to be used as an input device of the POS main body 2, besides those for enabling the tablet PC 3 to be used as a normal PC. That is, the storage devices do not store therein confidential or important information, such as a program for executing payment processing, customer information including credit card information, and sales information. Therefore, even if the tablet PC 3 is lost due to misplacement, theft, or the like, it is possible to prevent such valuable information from being leaked outside.

The input and output controller 320 is connected to the display 31 and the touch panel 32. The input and output controller 220 includes both a function of an input and output interface for hardware to be connected to the control unit 300 and a function of controlling such hardware. Consequently, the control unit 300 is capable of transmitting and receiving information or data to and from the display 31 and the touch panel 32 via the input and output controller 320 and is capable of controlling the hardware based on instructions from the control unit 300.

The power supply circuit 330 is connected to a battery 33. The power supply circuit 330 supplies electric power to the respective kinds of hardware of the tablet PC 3. For example, the power supply circuit 330 steps down a voltage supplied from the battery 33 to an operating voltage of each kind of hardware.

The communication I/F 340 is for communicating with the POS main body 2. The control unit 300 is capable of transmitting and receiving information or data to and from the POS main body 2 via the communication I/F 340.

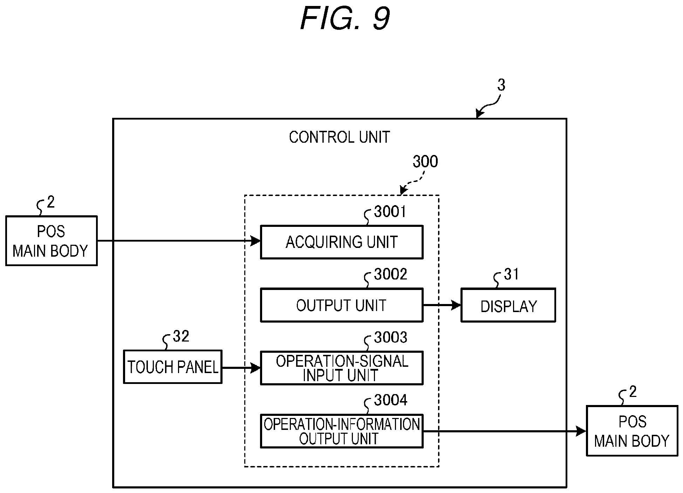

FIG. 9 is a block diagram illustrating an certain functional aspects of the tablet PC 3. The CPU 301 operates according to a control program stored in the ROM 302 or the control program unit 311 of the memory unit 310, and the control unit 300 functions as an acquiring unit 3001, an output unit 3002, an operation-signal input unit 3003, and an operation-information output unit 3004. These functions may be provided by software, hardware, or a combination of software and hardware.

The acquiring unit 3001 acquires, from the POS main body 2, the display data to be displayed on the display 31. For example, the acquiring unit 3001 receives the display data transmitted by the POS main body 2 in response to an output of the operation-information output unit 3004. The display data of an initial screen displayed on the display 31 may be acquired from the POS main body 2 during a start of power supply of the tablet PC 3 or may be stored in the memory unit 310 in advance.

The output unit 3002 outputs the display data acquired by the acquiring unit 3001 to the display 31. Consequently, the display 31 can display the same information as those displayed on the display 21 of the POS main body 2.

An operation signal based on input operation on the touch panel 32 is sent to the operation-signal input unit 3003. The operation signal indicates a pressed position of the touch panel 32.

The operation-information output unit 3004 outputs, to the POS main body 2, operation information based on the operation that was input in response to the information displayed on the display 31 based on the display data. The operation information includes a signal indicating the information or data displayed on the display 31 and the operation signal. Consequently, the POS main body 2 can recognize which operation unit, such as a button or the like displayed on a display screen, has been operated on which display screen.

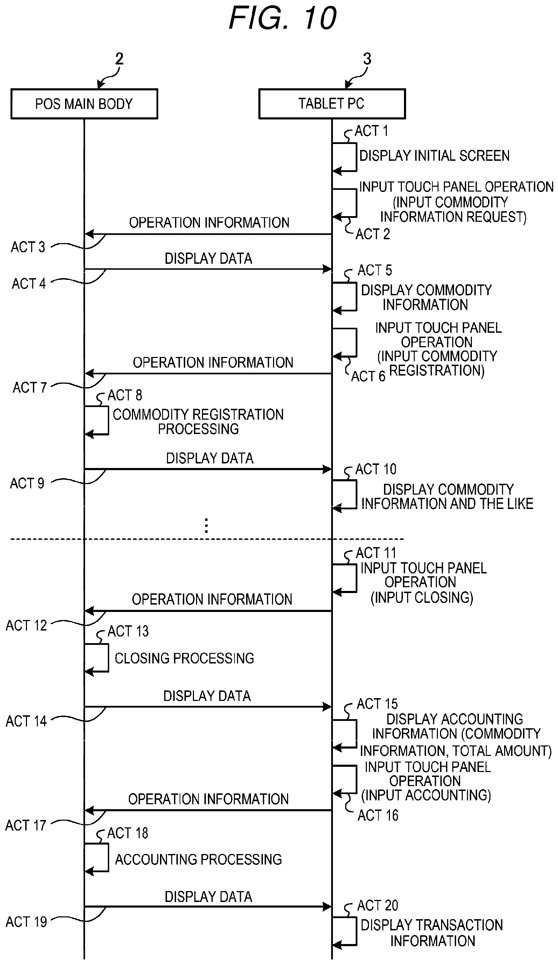

Operation of payment processing including commodity registration processing, closing processing, and accounting processing is now further explained. FIG. 10 is a sequence chart of the payment processing by the sales data processing system according to the present embodiment. The sequence chart illustrates a flow in the case where various kinds of processing are appropriately performed and an error does not occur.

If the power supply is turned on, the tablet PC 3 displays an initial screen on the display 31 (ACT 1). The initial screen may be displayed based on the display data acquired from the POS main body 2. Alternatively, the display data stored in the memory unit 310 in advance may be read out and used for displaying the initial screen. A store clerk attending a customer operates the touch panel 32 to display, for example, information of a commodity requested by the customer. In the tablet PC 3, a signal representing such operation is input to the operation-signal input unit 3003 (ACT 2).

In the tablet PC 3, the operation-information output unit 3004 transmits operation information to the POS main body 2 (ACT 3). Upon receipt of the operation information, the POS main body 2 analyzes the operation information and transmits the display data corresponding to the operation information to the tablet PC 3 (ACT 4). For example, the POS main body 2 reads out the commodity information of a commodity indicated by the received operation information from the commodity master and creates and transmits the display data to the tablet PC 3.

The tablet PC 3 displays the commodity information on the display 31 based on the received display data (ACT 5). The commodity information includes a commodity name, a price, colors and sizes available, an image of the commodity, and the like. If the customer wishes to purchase the commodity displayed on the tablet PC 3, the store clerk operates the touch panel 32 to input a commodity code of the commodity. The operation of the touch panel 32 is performed by, for example, pressing a displayed purchase icon. In the tablet PC 3, a signal representing such operation is input to the operation-signal input unit 3003 (ACT 6).

In the tablet PC 3, the operation-information output unit 3004 transmits the operation information to the POS main body 2 (ACT 7). The POS main body 2 analyzes the operation information, performs the commodity registration processing about the commodity specified by the commodity code included in the operation information (ACT 8) and transmits the display data for confirming the registered commodity to the tablet PC 3 (ACT 9). The tablet PC 3 performs, based on the received display data, display for confirming the registered commodity, for example, display of the commodity information and the like (ACT 10). If there are a plurality of commodities to be registered, the sales data processing system repeats the processes of ACT 2 to ACT 10.

If the commodity registration regarding all commodities to be purchased by the customer is complete, the store clerk operates the touch panel 32 to perform the closing processing. In the tablet PC 3, a signal representing such operation is input to the operation-signal input unit 3003 (ACT 11). The operation-information output unit 3004 transmits the operation information for requesting execution of the closing processing to the POS main body 2 (ACT 12).

The POS main body 2 analyzes the received operation information and executes the closing processing (ACT 13). The POS main body 2 then transmits the display data for confirming a result of the closing processing to the tablet PC 3 (ACT 14). For example, the POS main body 2 transmits, as the display data, to the tablet PC 3, data for displaying commodity information of the registered commodity and accounting information including a calculated total amount.

If the POS main body 2 receives the display data transmitted in ACT 14, the tablet PC 3 displays the accounting information on the display 31 based on the display data (ACT 15). If the customer confirms the accounting information displayed on the display 31, the store clerk operates the touch panel 32 to perform the accounting processing. In the tablet PC 3, a signal representing such operation is input to the operation-signal input unit 3003 (ACT 16). The operation-information output unit 3004 transmits the operation information requesting execution of the accounting processing to the POS main body 2 (ACT 17).

The POS main body 2 analyzes the received operation information and executes the accounting processing (ACT 18). The POS main body 2 then transmits the display data for confirming a result of the accounting processing to the tablet PC 3 (ACT 19). For example, the POS main body 2 transmits, as the display data, to the tablet PC 3, data for displaying commodity information, a total amount, a change amount, and the like of the commodities for which the accounting processing is completed.

Upon receipt of the display data, the tablet PC 3 displays transaction information (ACT 20). The store clerk shows the displayed transaction information to the customer so that the customer can confirm the transaction information. This completes the payment processing for the commodities to be purchased by the customer.

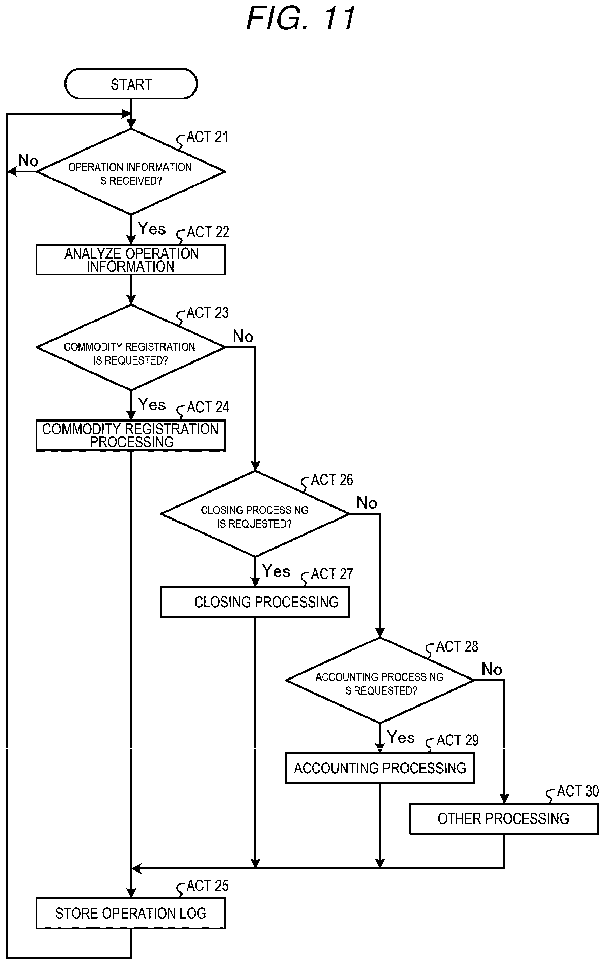

FIG. 11 is a flowchart of the payment processing performed by the control unit 200 of the POS main body 2 according to the present embodiment. The POS main body 2 operates in the tablet mode (the first mode) in which the POS main body 2 operates based on operation information received from the tablet PC 3 and the main body mode (the second mode) in which the POS main body 2 operates based on operation via the operation unit (such as the touch panel 22 and the keyboard 23) of the POS main body 2. In one instance, the POS main body 2 initially operates in the tablet mode, and if specific operation that triggers mode switch is performed on, for example, the keyboard 23, the POS main body 2 operates in the main body mode. If further specific operation is performed on, for example, the keyboard 23 during the operation in the main body mode, the POS main body 2 shifts back to the tablet mode. The main body mode can be considered an operation mode that will be utilized if an accident occurs that makes the tablet PC 3 unavailable or makes the outstanding processing inexecutable at the tablet PC 3.

The control unit 200 in the tablet mode determines whether the receiving unit 2003 has received the operation information (ACT 21). If the receiving unit 2003 has not received the operation information (No in ACT 21), the control unit 200 returns to the processing in ACT 21 and stays on standby. If the receiving unit 2003 has received the operation information (Yes in ACT 21), the analyzing unit 2004 performs an analysis of the operation information (ACT 22). For example, the analyzing unit 2004 analyzes a request of the tablet PC 3 based on information indicating a display screen to be displayed in the tablet PC 3 and information indicating a position operated on the display 31, both information being included in the operation information.

The control unit 200 then determines whether the operation information analyzed by the analyzing unit 2004 is a commodity registration request (ACT 23). If the operation information is the commodity registration request (Yes in ACT 23), the commodity registering unit 2005 executes the commodity registration processing (ACT 24). The operation-log storing unit 2013 stores an operation log of the tablet PC 3 in the operation log unit 214 (ACT 25). The control unit 200 returns to the processing in ACT 21.

If the operation information from the tablet PC 3 is not a commodity registration request (No in ACT 23), the control unit 200 determines whether the operation information is a closing processing request (ACT 26). If the operation information is a closing processing request (Yes in ACT 26), the closing processing unit 2006 executes the closing processing (ACT 27). The control unit 200 shifts to the processing in ACT 25.

If the operation information from the tablet PC 3 is not a closing processing request (No in ACT 26), the control unit 200 determines whether the operation information is an accounting processing request (ACT 28). If the operation information is an accounting processing request (Yes in ACT 28), the accounting processing unit 2007 executes the accounting processing (ACT 29). The control unit 200 shifts to the processing in ACT 25.

If the operation information is not an accounting processing request (No in ACT 28), the control unit 200 executes various other kinds of processing as appropriate (ACT 30) and then returns to the processing in ACT 25. Like the commodity registration processing, the closing processing, and the accounting processing, the various other kinds of processing are respectively executed based on the results of the analysis of the operation information by the analyzing unit 2004. Examples of the other kinds of processing include, for example, processing for transmitting display data of commodity information to the tablet PC 3 and processing for cancelling a commodity registration.

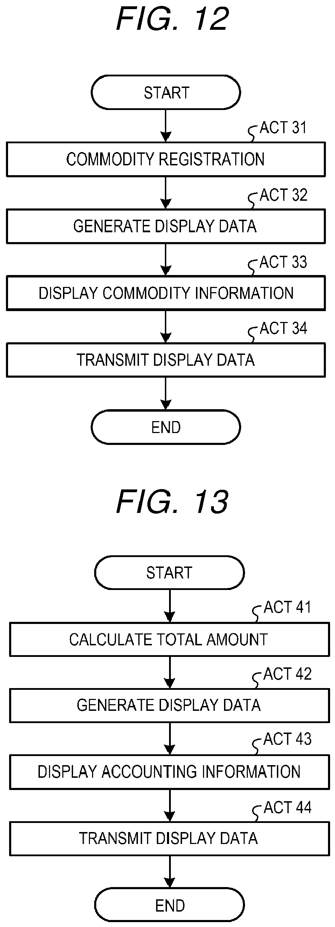

The commodity registration processing, the closing processing, and the accounting processing are now further explained. FIG. 12 is a flowchart of the commodity registration processing executed by the control unit 200. The commodity registration processing is executed on condition that the operation information received from the tablet PC 3 by the receiving unit 2003 includes information indicating a commodity code and a commodity registration request.

The commodity registering unit 2005 performs commodity registration for a commodity specified by the commodity code included in the operation information (ACT 31). For example, the commodity registering unit 2005 refers to the commodity master stored in the commodity master unit 212 and reads out the commodity information for the commodity specified by the commodity code included in the operation information and stores this commodity information until the payment processing is completed. Because sales registration for performing the payment processing is also performed, the commodity registration may also be referred to as sales registration.

The generating unit 2001 then generates display data for displaying the commodity information of the registered commodity (ACT 32). The commodity information includes, for example, a commodity code, a commodity name, a price, a color, and a size.

The output unit 2002 outputs the display data generated by the generating unit 2001 to the display 21 and causes the display 21 to display the commodity information based on the display data (ACT 33). The output unit 2002 outputs the display data generated by the generating unit 2001 to the tablet PC 3 (ACT 34) and ends the commodity registration processing.

FIG. 13 is a flowchart of the closing processing executed by the control unit 200. The closing processing is executed on condition that the operation information received from the tablet PC 3 by the receiving unit 2003 includes a closing processing request.

The closing processing unit 2006 reads out the registered commodity information and calculates a total amount (ACT 41). The generating unit 2001 then generates the display data for displaying accounting information (ACT 42). The accounting information includes, for example, the commodity information and the information indicating the total amount of target commodities of the closing processing.

The output unit 2002 outputs the display data generated by the generating unit 2001 to the display 21 and causes the display 21 to display the accounting information based on the display data (ACT 43). The output unit 2002 outputs the display data generated by the generating unit 2001 to the tablet PC 3 (ACT 44) and ends the closing processing.

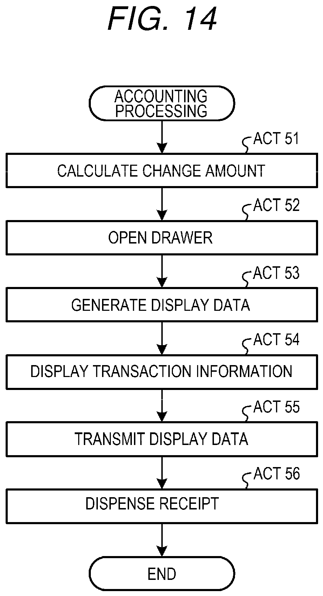

FIG. 14 is a flowchart of the accounting processing executed by the control unit 200. The accounting processing if the operation information received from the tablet PC 3 by the receiving unit 2003 includes information indicating an amount received from the customer and information indicating an accounting processing request.

After confirming with the customer about the accounting information displayed on the display 31 of the tablet PC 3 by the accounting processing, the store clerk guides the customer to the register counter at which the drawer 5 is disposed and receives cash or other payment from the customer. The store clerk inputs the amount of the cash or other payment received from the customer and the accounting processing request to the touch panel 32. An input field for a received amount, numeric keys for inputting an amount, an accounting button for performing an accounting processing request, and the like are displayed together with the accounting information displayed by the display 31. Therefore, the store clerk can easily input the amount received from the customer and the accounting processing request via the touch panel 32.

The accounting processing unit 2007 calculates a change due amount based on the received amount from the customer included in the operation information and the total amount calculated in the closing processing (ACT 51). The drawer control unit 2010 outputs a control signal to the drawer 5 and opens the drawer 5 (ACT 52). The store clerk stores the cash received from the customer in the drawer 5 and takes out the change due from the drawer 5 and hands the change over to the customer.

The generating unit 2001 then generates display data for displaying transaction information (ACT 53). The transaction information includes, for example, information indicating commodity information, a total amount, and a change amount of commodities purchased by the customer. The output unit 2002 outputs the display data generated by the generating unit 2001 to the display 21 and causes the display 21 to display the transaction information based on the display data (ACT 54). The output unit 2002 outputs the display data generated by the generating unit 2001 to the tablet PC 3 (ACT 55).

The printer control unit 2011 then outputs a control signal to the receipt printer 4 and causes the receipt printer 4 to print and dispense a receipt (ACT 56). The store clerk hands the receipt over to the customer. The payment processing for one transaction is now complete.

If the customer desires to make a cashless payment such as payment by a credit card, the POS main body 2 can perform cashless accounting processing using a card reader or the like at the register counter.

According to the present embodiment, when an accident that makes the tablet PC 3 unusable or unavailable, such as exhaustion of the battery 33 of the tablet PC 3 or misplacement or loss of the tablet PC 3, occurs, the store clerk can continue to perform the payment processing using the display 21, the touch panel 22, the keyboard 23, and the scanner 24 of the POS main body 2 installed, for example, in the back office of the store.

For example, if the store clerk performs specific operation on the keyboard 23 of the POS main body 2 that triggers mode switch, the operation input unit 2008 receives a mode switching signal and the mode switching unit 2012 switches the operation mode of the POS main body 2 to the main body mode. Therefore, the store clerk can continue the outstanding processing by using the display 21, the touch panel 22, the keyboard 23, and the scanner 24 of the POS main body 2. The payment processing in the main body mode at the POS main body 2 may be the same as or similar to the generally known payment processing.

According to the present embodiment, the POS main body 2 generates and outputs the display data for the tablet PC 3 to display the same information as those to be displayed on the display 21 of the POS main body 2. This makes it possible for the POS main body 2 to execute or continue the accounting processing based on the operation information received from the tablet PC 3, which information represents the operation that had been performed on the tablet PC 3 corresponding to the output display data. Accordingly, the store clerk not only can perform the accounting processing while carrying the tablet PC 3 and attending the customer but also can confirm the status of the outstanding processing by using the POS main body 2 when the tablet PC 3 becomes dysfunctional because of battery exhaustion or the like.

In the present embodiment, the POS main body 2 functioning as the sales data processing apparatus causes the tablet PC 3 to function as an input device of the POS main body 2. Therefore, it is unnecessary to store, in the tablet PC 3 itself, confidential or important information, such as a program for executing the payment processing, customer information including credit card information, and sales information. Accordingly, even if the store loses the tablet PC 3 because of misplacement, theft or the like, the store can protect such valuable information.

In the present embodiment, information is always or regularly displayed on the display 21 of the POS main body 2. In another embodiment, information may be displayed only when necessary or requested. For example, in a case where a store clerk does not always monitor the POS main body 2, information may be displayed on the display 21 only when the tablet PC 3 cannot be used and the control unit 200 is switched to the main body mode. In such a case, even when no information is being shown on the display 21, the generating unit 2001 may continue generating the display data to be used for display on the display 21 when a need arises. This makes it possible to immediately use the POS main body 2 and confirm the status of the processing based on the generated display data when the tablet PC 3 cannot be used.

Furthermore, since the POS main body 2 includes the operation unit (such as the touch panel 22, the keyboard 23 and the scanner 24) that can trigger execution of the processing in response to the store clerk's operation, for example, when the tablet PC 3 becomes dysfunctional in the middle of the processing (such as the registration processing and the accounting processing) for a plurality of commodities that a customer wishes to purchase, it is possible for the store clerk to readily continue the outstanding processing at the POS main body 2 by operating at least one of its operation devices.

Since the POS main body 2 also includes the mode switching unit 2012 for switching the operation mode of the accounting processing unit 2007 between the tablet mode (for executing the accounting processing based on an operation signal received from the tablet PC 3) and the main body mode (for executing the accounting processing based on input operations at the POS main body 2, for example, even when the store clerk is performing the accounting processing using the tablet PC 3, operation at the POS main body 2 does not affect the accounting processing at the tablet PC 3 if the operation mode of the POS main body 2 is properly selected. This incorrect accounting processing.

In the present embodiment, since the POS main body 2 includes the operation-log storing unit 2013 that saves an operation log of the tablet PC 3 in the operation log unit 214 based on the operation information received from the tablet PC 3, for example, in the event where the tablet PC 3 becomes dysfunctional in the middle of the processing, it is possible to confirm the operation history of the tablet PC 3 based on the saved operation log at the POS main body 2. Also, for example, even if the tablet PC 3 is illegally used, the operation history of the tablet PC 3 can be readily confirmed at the POS main body 2.

The POS main body 2 can execute part of the processing executed by the control unit 200 based on the operation information from the tablet PC. For example, the commodity registration processing, the closing processing, the accounting processing, and the like executed by the POS main body 2 can be executed according to the operation information received from the tablet PC 3. On the other hand, processing for transmitting and receiving data to and from the store server 6 (may also be referred to as back-office processing), such as processing for transmitting sales data to the store server 6 as needed cannot be executed by the tablet PC 3. Operations related to an electronic journal function, an inspection and settlement function, a report output function, and a coin collection instructing function cannot be performed at the tablet PC but can be performed at the POS main body 2.

Accordingly, in the present embodiment, only part of the processing to be executed by the control unit 200 follows the operation information received from the tablet PC 3 while the back-office processing cannot be executed according to the operation information from the tablet PC 3. This avoids any inappropriate or unnecessary back-office processing due to erroneous operation of the tablet PC 3 by a store clerk while attending a customer.

In the present embodiment, the control programs executed by the POS main body 2 and the tablet PC 3 may be provided while being recorded in a computer-readable recording medium such as a CD-ROM. The control programs executed by the POS main body 2 and the tablet PC 3 in the present embodiment may be provided by being stored on a computer connected to a network such as the Internet and downloaded through the network. Furthermore, the control programs may be provided and/or accessed through the network such as the Internet.

While certain embodiments have been described, these embodiments have been presented by way of example only and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The accompanying claims and their equivalents are intended to cover such forms or modifications as would fall within the scope of the inventions.

## Claims

1. A sales data processing apparatus, comprising:
a display device;
a generating unit configured to generate display data for displaying information on the display device and an information terminal;
an output unit configured to output the display data to the information terminal; and
a settlement processing unit configured to execute accounting processing for a transaction based on operation information received from the information terminal in response to displayed information displayed according to the display data output from the output unit.

2. The sales data processing apparatus according to claim 1, further comprising an input unit configured to instruct the settlement processing unit to execute the accounting processing.

3. The sales data processing apparatus according to claim 2, further comprising a mode switching unit configured to switch an operating mode of the settlement processing unit between a first mode permitting execution of the accounting processing based on the operation information received from the information terminal and a second mode permitting execution of the accounting processing based on operation of the input unit.

4. The sales data processing apparatus according to any one of claims 1 to 3, further comprising an operation-log storing unit configured to store an operation log of the information terminal in a storage device based on the operation information received from the information terminal.

5. The sales data processing apparatus according to claim 4, wherein the operation-log storing unit sequentially stores the operation log for each transaction performed at the information terminal.

6. The sales data processing apparatus according to any one of claims 1 to 5, wherein the display data includes data to be used for the accounting processing.

7. The sales data processing apparatus according to claim 6, wherein the generating units generates the display data if the operation information includes a request for the accounting processing.

8. The sales data processing apparatus according to any one of claims 1 to 7, wherein the display device displays information based on the generated display data only if the information terminal cannot display the information based on the generated display data.

9. A sales data processing system, comprising:
the sales data processing apparatus according to any one of claims 1 to 8; and
an information terminal comprising a display device and a controller,
wherein the display device of the information terminal is configured to display the information based on the received display data; and
the controller of the information terminal is configured to output the operation information to the sales data processing apparatus based on an input operation at the information terminal related to the displayed information.

10. The sales data processing system according to claim 9, wherein the information terminal functions as an input device of the sales data processing apparatus.

11. A non-transitory computer-readable medium storing a program that, when executed, causes a computer to perform sales data processing method comprising:
generating display data to be used for displaying information on both a display device of a sales data processing apparatus and an information terminal;
outputting the generated display data to the information terminal; and
executing accounting processing for a transaction based on operation information received from the information terminal in response to the display data.

12. The non-transitory computer-readable medium according to claim 11, the method further comprising switching an operation mode of the sales data processing apparatus between a first mode permitting execution of the accounting processing based on the operation information received from the information terminal and a second mode permitting execution of the accounting processing based on operation of the sales data processing apparatus.

13. The non-transitory computer-readable medium according to claim 11 or 12, the method further comprising storing an operation log for the information terminal in a storage device based on the operation information received from the information terminal.

14. The non-transitory computer-readable medium according to any one of claims 11 to 13, the method further comprising generating the display data if the operation information includes a request for the accounting processing, the generated display data including data to be used for the accounting processing.

15. The non-transitory computer-readable medium according to any one of claims 11 to 14, the method further comprising displaying the information on the display device based on the generated display data only if the information terminal cannot display the information.
